# EUROPÄISCHE PATENTSCHRIFT

(11) **EP 1 737 634 B1**
(45) Veröffentlichungstag und Bekanntmachung des Hinweises auf die Patenterteilung: **14.09.2011**
(21) Anmeldenummer: 05716580.5
(22) Anmeldetag: 15.04.2005
(51) Int. Cl.: B29C 33/44, B29C 33/50, A45D 40/16

(54) **ENTFORMSTATION**
DEMOULDING STATION
STATION DE DEMOULAGE

(30) Priorität: 15.04.2004 DE 102004018251
(43) Veröffentlichungstag der Anmeldung: 03.01.2007
(73) Patentinhaber: Weckerle GmbH, 82362 Weilheim (DE)
(72) Erfinder: GILG, Franz, Xaver, 82398 Polling (DE)
(74) Vertreter: Hohgardt, Martin
(86) Internationale Anmeldenummer: PCT/EP2005/004037
(87) Internationale Veröffentlichungsnummer: WO 2005/099988

(56) Entgegenhaltungen:
- EP-A- 0 966 898
- DE-C- 900 544
- FR-A- 2 468 455

## Beschreibung

Die vorliegenden Erfindung betrifft eine Vorrichtung zur Entformung von geformten Massen aus einer Form, insbesondere zur Entformung von Lippenstiftminen.

Zur Herstellung von Lippenstiftminen wird die Lippenstiftmasse in einem heißen und flüssigen Zustand in eine Form gefüllt und dort so lange abgekühlt, bis die Masse eine ausreichende Festigkeit aufweist. Zur Entnahme der geformten Masse aus der Form, der sogenannten Entformung, sind im Stand der Technik verschiedene Verfahren bekannt, die jeweils unterschiedliche Vor- und Nachteile aufweisen.

Gemäß einem im Stand der Technik bekannten Verfahren wie aus EP 0 966 898 A2 bekannt, wird die geformte Masse nach dem Erkalten aus der Form herausgeschoben. Ein solches Schiebeverfahren ist insbesondere vorteilhaft für dünne zylindrische Lippenstiftminen, sogenannte Slimliner.

Gemäß einem weiteren im Stand der Technik bekannten Verfahren, wie aus DE 900 544 C bekannt, wird die geformte Masse nach dem Erkalten mit Hilfe von Druckluft aus der Form herausgedrückt. Dieses Ausblasverfahren wird normalerweise für Lippenstiftminen mit der klassischen Form verwendet.

Beide Verfahren haben den unter anderem Nachteil, dass für die Entformung die Verwendung eines Trennmittels notwendig ist.

Im Stand der Technik ist noch ein weiteres Verfahren zur Entformung bekannt, bei dem die Form aus einem flexiblen Material besteht und mit Hilfe von Unterdruck derart vergrößert wird, dass sich die Innenwand der Form von der geformten und erkalteten Masse löst und die Masse mit Hilfe eines Greifers einfach aus der Form entnommen werden kann. Dieses Verfahren kann sowohl für klassische Lippenstiftminen, als auch für dünne zylindrische Lippenstiftminen verwendet werden. Aufgrund des flexiblen Materials haben die bei diesem Verfahren verwendeten Formen allerdings eine geringere Haltbarkeit. Darüber hinaus müssen bei diesem Verfahren für unterschiedliche Massen auch unterschiedliche Formen verwendet werden.

Die im Stand der Technik bekannten Vorrichtungen zur Herstellung von Lippenstiften können jeweils ein Verfahren zur Entformung durchführen. Der Käufer einer solchen Vorrichtung muss deshalb bereits beim Kauf einer solchen Vorrichtung entscheiden welches Verfahren für ihn am sinnvollsten ist.

Die Aufgabe der vorliegenden Erfindung ist es nun, eine Vorrichtung bereitzustellen, bei der die Vorteile der verschiedenen Entformverfahren in einer Vorrichtung vereint werden.

Erfindungsgemäß wird die Aufgabe durch eine Vorrichtung zur Entformung von geformten Massen aus einer Form, insbesondere zur Entformung von Lippenstiftminen, nach Anspruch 1 gelöst.

Mit Hilfe der erfindungsgemäßen Vorrichtung zur Entformung kann wahlweise eines aus der Mehrzahl an möglichen Entformverfahren ausgewählt werden, so dass die für das jeweilige Verfahren spezifischen Vorteile ausgenutzt werden können. Durch die erfindungsgemäße Vorrichtung zur Entformung können somit unterschiedliche Arten von Lippenstiftminen mit einer Entformungsvorrichtung optimal hergestellt werden. Die erfindungsgemäße Vorrichtung zur Entformung ist dabei eine Einheit, die aufgrund ihrer Mittel im Zusammenhang mit den verschiedenen Verfahren verwendet werden kann.

In einer bevorzugten Ausführungsformen der Erfindung weist die Vorrichtung Mittel für ein Verfahren auf, nach dem die geformte Masse mit Hilfe eines Schiebemechanismus aus der Form herausgeschoben wird. Vorzugsweise weist der Schiebemechanismus dafür einen Stempel zum Herausschieben der geformten Masse auf.

In einer weiteren bevorzugten Ausführungsformen der Erfindung weist die Vorrichtung Mittel für ein Verfahren auf, nach dem die geformte Masse mit Hilfe von Druckluft aus der Form herausgedrückt wird. Dafür weist die Vorrichtung vorzugsweise mindestens eine Öffnung auf, durch die die Druckluft zum Herausdrücken der geformten Masse aus der Form entweichen kann

Vorzugsweise weist die erfindungsgemäße Vorrichtung Mittel für ein Verfahren auf, bei dem zur Entnahme der geformten Masse die Form mit Hilfe von Unterdruckt vergrößert werden. Hierbei handelt es sich vorzugsweise um mindestens eine Öffnung durch die der Unterdruck zum Vergrößern der Form bereitgestellt werden kann.

Die erfindungsgemäße Vorrichtung weist einen Stempel zum Herausschieben der geformten Masse aus der Form auf, wobei der Stempel mindestens eine Öffnungen aufweist durch die wahlweise Druckluft zum Herausdrücken der geformten Masse aus der Form oder ein Unterdruck zum Vergrößern der Form bereitgestellt werden kann.

In einer bevorzugten Ausführungsform der vorliegenden Erfindung können die für die Entformung zu verwendenden Verfahren automatisch gewechselt werden.

In einer weiteren Ausführungsform der vorliegenden Erfindung wird die Aufgabe durch ein Verfahren nach Anspruch 12 gelöst.

Im Folgenden werden Ausführungsbeispiele der Erfindung anhand der beigefügten Zeichnungen erläutert, in denen
- Figur 1: eine Ausführungsform der erfindungsgemäßen Vorrichtung zur Entformung zusammen mit einer Form für einen Schiebemechanismus zeigt,
- Figur 2: eine Ausführungsform der erfindungsgemäßen Vorrichtung zur Entformung zusammen mit einer Form aus der die geformte Masse mit Hilfe von Druckluft herausgedrückt wird zeigt,
- Figur 3: eine Ausführungsform der erfindungsgemäßen Vorrichtung zur Entformung zusammen mit einer Form die mit Hilfe von Unterdruck vergrößert wird zeigt, und
- Figur 4: eine nicht erfindungsgemäße Ausführungsform der Vorrichtung zur Entformung zeigt, bei der Unterdruck mit anderen Mitteln bereit gestellt wird.

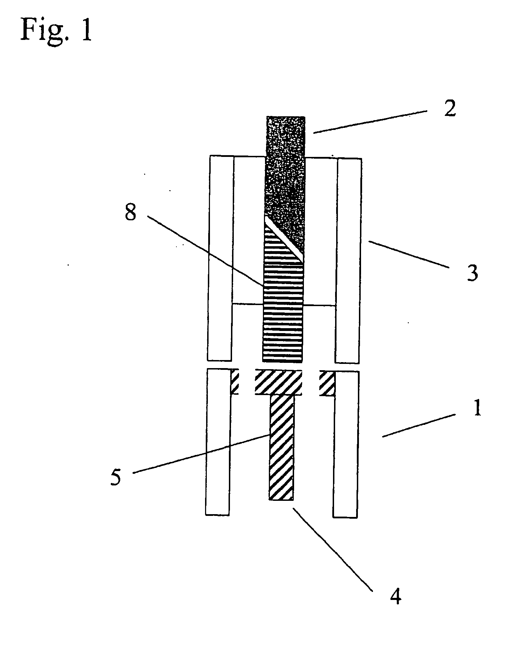

Die Figuren 1 bis 3 zeigen beispielhaft eine Ausführungsform der erfindungsgemäßen Vorrichtung zur Entformung 1. Diese Vorrichtung zur Entformung 1 ist geeignet, um aus verschiedenen Arten von Formen 3 eine geformte Masse zu entformen. Dafür wird die Vorrichtung zur Entformung 1 an der Unterseite der Form 3 angeordnet. In Abhängigkeit von der verwendeten Form 3, kann die Vorrichtung zur Entformung 1 unterschiedliche Verfahren zur Entformung durchführen.

In Figur 1 wird die erfindungsgemäße Vorrichtung zur Entformung 1 zusammen mit einer Form 3 gezeigt, die mit Hilfe eines Schiebemechanismus 4 entformt werden kann. Um die geformte Masse 2 aus der Form 3 herauszuschieben, weist die Vorrichtung zur Entformung 1 deshalb einen entsprechenden Schiebemechanismus 4 auf. Nach der vorliegenden Erfindung ist dies eine Art Stempel 5, der in die Unterseite der Form 3 hereingeschoben werden kann. Dieser Stempel kann nun entweder direkt die geformte Masse 2 aus der Form 3 herausschieben, oder - wie in Fig. 1 gezeigt - einen Mechanismus 8 in der Form 3 antreiben, der die geformte Masse 2 nach oben aus der Form 3 herausdrückt. Die geformten Masse 2 kann nach dem Herausdrücken aus der Form 3 von einer weiteren Vorrichtung (nicht gezeigt) aufgenommen und weiteren Verfahrensschritten zugeführt werden.

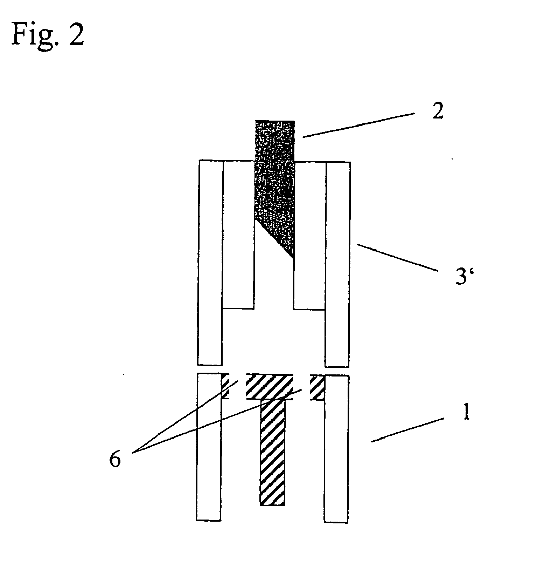

Figur 2 zeigt das Zusammenspiel der erfindungsgemäßen Vorrichtung zur Entformung 1 mit einer Form 3' bei der die geformte Masse mit Hilfe von Druckluft ausgeworfen wird. Dafür weist die Vorrichtung zur Entformung 1 mindestens eine Öffnung 6 auf, aus der die für die Entformung notwendige Druckluft entweichen kann. Die Öffnungen 6 sind dabei vorzugsweise so angeordnet, dass sie das Herausschieben der geformten Masse aus der Form, wie es im Zusammenhang mit Figur 1 beschrieben wurde, nicht behindern.

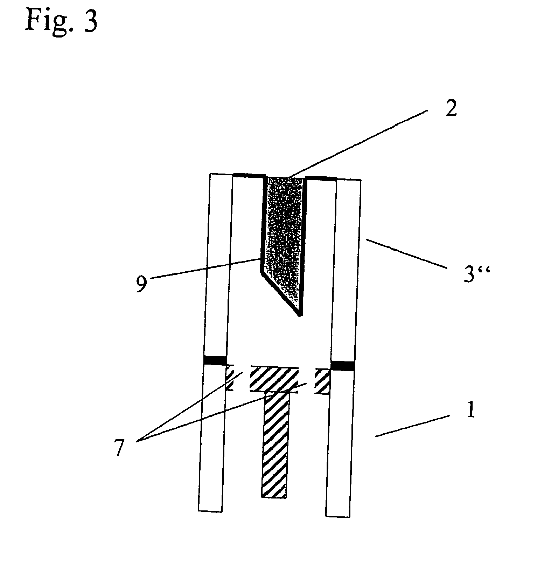

Figur 3 zeigt eine Form 3" mit einer darin angeordneten flexiblen Form 9, bei der die flexible Form 9 mit Hilfe von durch die Vorrichtung zur Entformung 1 bereitgestelltem Unterdruck so erweitert wird, dass die darin angeordnete geformte Masse 2 von einer weiteren Vorrichtung (nicht gezeigt) aufgenommen und weiteren Verfahrensschritten zugeführt werden kann. Dieser Unterdruck kann mit verschiedenen Hilfsmittel bereitgestellt werden. In der Figur 3 ist die Vorrichtung zur Entformung 1 derart ausgestaltet, dass sie luftdicht an der Unterseite der Form 3" angeordnet werden kann. Mit Hilfe mindestens einer in der Vorrichtung zur Entformung 1 vorgesehenen Öffnung 7 kann dann ein in der Vorrichtung zur Entformung 1 erzielter Unterdruck an die Form 3" weitergegeben werden, so dass sich die flexible Form 9 kontrolliert aufweitet.

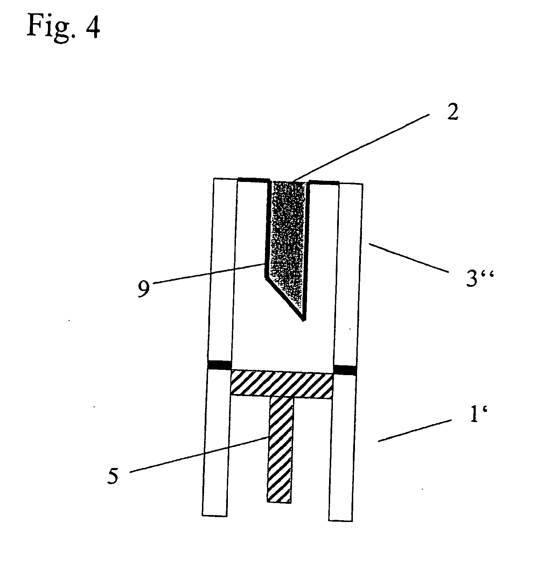

Figur 4 zeigt eine nicht erfindungsgemäße Ausführungsform der Vorrichtung zur Entformung 1'. In dieser Ausführungsform wird durch ein Zurückziehen des Stempels 5 in die Vorrichtung zur Entformung 1 ein Unterdruck erzielt durch den sich die flexible Form 9 in der Form 3" wie gewünscht aufweitet. Durch ein Vorstoßen des Stempels 5 kann allerdings auch ein Schiebemechanismus realisiert oder Druckluft bereit gestellt werden, so dass auch die anderen Verfahren zur Entformung mit Hilfe dieser Vorrichtung durchgeführt werden können.

Die erfindungsgemäße Vorrichtung zur Entformung 1 wird vorzugsweise in Vorrichtungen zur Herstellung von Lippenstiftminen verwendet. Hierbei werden flüssige, heiße Massen in die Form 3 eingefüllt, abgekühlt und mit Hilfe der Vorrichtung zur Entformung 1 im gehärteten und geformten Zustand wieder aus der Form 3 entfernt. Dies ermöglicht, dass eine Maschine für die Herstellung von Lippenstiften wahlweise eines von mehreren verschiedenen Verfahren zur Entformung verwendet kann. Hierfür muss gegebenenfalls lediglich die Form 3 selber ausgewechselt werden. Dafür sind die Formen 3 vorzugsweise derart ausgestaltet, dass sie die gleichen Außenabmessungen aufweisen. Außerdem sind die Formen vorzugsweise derart in der Maschine arretiert, dass sie mit wenigen Handgriffen gelöst und wieder befestigt werden können.

In Abhängigkeit von der eingesetzten Form 3 wählt entweder der Benutzer der Maschine manuell das richtige Entformungsverfahren aus, oder die Maschine erkennt die eingesetzte Form 3 und verwendet dementsprechend die Vorrichtung zur Entformung 1 in geeigneter Weise.

## Patentansprüche

1. Vorrichtung zur Entformung (1) von geformten Massen (2) aus einer Form (3), insbesondere zur Entformung von Lippenstiftminen, wobei
die Vorrichtung zur Entformung (1) Mittel aufweist, mit denen die geformte Masse (2) wahlweise mit einem von mindestens zwei
verschiedenen Verfahren entformt werden kann,
**dadurch gekennzeichnet, dass**
die Vorrichtung zur Entformung (1) einen Stempel (5) zum Herausschieben der geformten Masse (2) aus der Form (3) aufweist, wobei der Stempel (5) mindestens eine Öffnung (6, 7) aufweist durch die wahlweise Druckluft zum Herausdrücken der geformten Masse (2) aus der Form (3) oder ein Unterdruck zum Vergrößern der Form (3) bereitgestellt werden kann.

2. Vorrichtung (1) nach dem vorhergehenden Anspruch, **dadurch gekennzeichnet, dass** die Vorrichtung zur Entformung (1) Mittel aufweist, mit denen die geformte Masse (2) wahlweise mit einem von mindestens drei verschiedenen Verfahren entformt werden kann.

3. Vorrichtung (1) nach einem der vorhergehenden Ansprüche, **dadurch gekennzeichnet, dass** nach einem der Verfahren die geformte Masse (2) mit Hilfe eines Schiebemechanismus (4) aus der Form (3) herausgeschoben wird.

4. Vorrichtung (1) nach dem vorhergehenden Anspruch 3 **dadurch gekennzeichnet, dass** der Schiebemechanismus (4) den Stempel (5) zum Herausschieben der geformten Masse (2) aufweist.

5. Vorrichtung (1) nach einem der vorhergehenden Ansprüche, **dadurch gekennzeichnet, dass** nach einem der Verfahren die geformte Masse (2) mit Hilfe von Druckluft aus der Form (3) herausgedrückt wird.

6. Vorrichtung (1) nach dem vorhergehenden Anspruch 5, **dadurch gekennzeichnet, dass** die Vorrichtung (1) mindestens eine Öffnung (6) aufweist durch die die Druckluft zum Herausdrücken der geformten Masse (2) aus der Form (3) entweichen kann.

7. Vorrichtung (1) nach einem der vorhergehenden Ansprüche, **dadurch gekennzeichnet, dass** nach einem der Verfahren zur Entnahme der geformten Masse (2) die Form (3) mit Hilfe von Unterdruckt vergrößert wird.

8. Vorrichtung (1) nach dem vorhergehenden Anspruch 7, **dadurch gekennzeichnet, dass** die Vorrichtung (1) mindestens eine Öffnung (7) aufweist durch die der Unterdruck zum Vergrößern der Form (3) bereitgestellt werden kann.

9. Vorrichtung (1) nach einem der vorhergehenden Ansprüche, **dadurch gekennzeichnet, dass** die Vorrichtung (1) Mittel aufweist mit denen die geformte Masse (2) nach dem Entformen aus der Form (3) entnommen werden kann.

10. Vorrichtung (1) nach einem der vorhergehenden Ansprüche, **dadurch gekennzeichnet, dass** die Vorrichtung (1) Mittel aufweist, mit denen das für die Entformung zu verwendende Verfahren automatisch gewechselt werden kann.

11. Die Vorrichtung nach jeglichem der Ansprüche 1 bis 10, wobei die Vorrichtung eine Vorrichtung zur Herstellung von Lippenstiftminen aus einer flüssigen Masse ist.

12. Verfahren zum Entformen von geformten Massen (2) aus einer Form (3), insbesondere zur Entformung von Lippenstiftminen, mit Hilfe einer Vorrichtung zur Entformung (1) nach Anspruch 1, wobei in einem Auswahlschritt eines von mindestens zwei Verfahren zur Entformung ausgewählt wird.

## Claims

1. Apparatus for demoulding (1) of moulded masses (2) from a mould (3), especially for demoulding of lipstick leads, wherein said apparatus for demoulding (1) comprises means, by which the moulded mass (2) can be optionally demoulded using one of at least two different methods, **characterized in that** said apparatus for demoulding (1) comprises a ram (5) for pushing out the moulded mass (2) from the mould (3), wherein the ram (5) comprises at least one opening (6, 7), through which optionally compressed air for pushing out the moulded mass (2) from the mould (3) or a vacuum for enlarging the mould (3) can be supplied.

2. Apparatus (1) according to the preceding claim, **characterized in that** the apparatus for demoulding (1) comprises means by which the moulded mass (2) can be optionally demoulded using one of at least three different methods.

3. Apparatus (1) according to any of the preceding claims, **characterized in that** according to one of the methods the moulded mass (2) is slided out from the mould (3) with the aid of a sliding mechanism (4).

4. Apparatus (1) according to the preceding claim 3, **characterized in that** the sliding mechanism (4) comprises the ram (5) for sliding out the moulded mass (2).

5. Apparatus (1) according to any of the preceding claims, **characterized in that** according to any of said methods the moulded mass (2) is pushed out from the mould (3) with the aid of compressed air.

6. Apparatus (1) according to the preceding claim 5, **characterized in that** the apparatus (1) comprises at least one opening (6) through which compressed air for pushing out the moulded mass (2) from the mould (3) can escape.

7. Apparatus (1) according to any of the preceding claims, **characterized in that** according to one of said methods for removing of the moulded mass (2), the mould (3) is expanded with the aid of vacuum.

8. Apparatus (1) according to the preceding claim 7, **characterized in that** the apparatus (1) comprises at least one opening (7) through which the vacuum for enlarging the mould (3) can be supplied.

9. Apparatus (1) according to any of the preceding claims, **characterized in that** the apparatus (1) comprises means by which the moulded mass (2) can be removed from the mould (3) after said demoulding.

10. Apparatus (1) according to any of the preceding claims, **characterized in that** the apparatus (1) comprises means by which said method used for demoulding can be changed automatically.

11. The apparatus (1) according to any of the claims 1 to 10, wherein said apparatus is an apparatus for production of lipstick leads from a liquid mass.

12. Method for demoulding of moulded masses (2) from a mould (3), especially for demoulding of lipstick leads, with the aid of an apparatus for demoulding (1) according to claim 1, wherein in a selection step one of at least two different methods for demoulding is selected.

## Revendications

1. Dispositif de démoulage (1) de masses moulées (2) d'un moule (3), en particulier de démoulage de raisins de bâtons à lèvres, lequel dispositif de démoulage (1) comporte des moyens à l'aide desquels la masse moulée (2) peut être démoulée selon un procédé choisi parmi au moins deux procédés différents, **caractérisé en ce que** le dispositif de démoulage (1) comporte un piston (5) pour expulser la masse moulée (2) du moule (3), le piston (5) présentant au moins une ouverture (6, 7) à travers laquelle il est possible de mettre en oeuvre, au choix, de l'air comprimé pour refouler la masse moulée (2) du moule (3) ou une pression négative pour agrandir le moule (3).

2. Dispositif (1) selon la revendication précédente, **caractérisé en ce que** le dispositif de démoulage (1) comporte des moyens à l'aide desquels la masse moulée (2) peut être démoulée au choix selon un procédé parmi au moins trois procédés différents.

3. Dispositif (1) selon une des revendications précédentes, **caractérisé en ce que**, selon un des procédés, la masse moulée (2) est expulsée du moule (3) à l'aide d'un mécanisme coulissant (4).

4. Dispositif (1) selon la revendication 3 précédente, **caractérisé en ce que** le mécanisme coulissant (4) comporte un piston (5) pour expulser la masse moulée (2).

5. Dispositif (1) selon une des revendications précédentes, **caractérisé en ce que**, selon un des procédés, la masse moulée (2) est refoulée hors du moule (3) à l'aide d'air comprimé.

6. Dispositif (1) selon la revendication 5 précédente, **caractérisé en ce que** le dispositif (1) présente au moins une ouverture (6) à travers laquelle l'air comprimé servant à refouler la masse moulée (2) hors du moule (3) peut s'échapper.

7. Dispositif (1) selon une des revendications précédentes, **caractérisé en ce que**, selon un des procédés, le moule (3) est agrandi à l'aide d'une pression négative pour permettre de prélever la masse moulée (2).

8. Dispositif (1) selon la revendication 7 précédente, **caractérisé en ce que** le dispositif (1) présente au moins une ouverture (7) à travers laquelle la pression négative servant à agrandir le moule (3) peut être mise en oeuvre.

9. Dispositif (1) selon une des revendications précédentes, **caractérisé en ce que** le dispositif (1) comporte des moyens avec lesquels la masse moulée (2) peut être prélevée après le démoulage du moule (3).

10. Dispositif (1) selon une des revendications précédentes, **caractérisé en ce que** le dispositif (1) comporte des moyens qui permettent de changer automatiquement de procédé à utiliser pour le démoulage.

11. Le dispositif selon une quelconque des revendications 1 à 10, lequel dispositif est un dispositif de fabrication de raisins de bâtons à lèvres à partir d'une masse liquide.

12. Procédé de démoulage de masses moulées (2) d'un moule (3), en particulier de démoulage de raisins de bâtons à lèvres, à l'aide d'un dispositif de démoulage (1) selon la revendication 1, un procédé de démoulage étant sélectionné parmi au moins deux procédés différents lors d'une étape de sélection.
